# EUROPEAN PATENT SPECIFICATION

(11) **EP 2 059 015 B1**
(45) Date of publication and mention of the grant of the patent: **04.09.2013**
(21) Application number: 08168392.2
(22) Date of filing: 05.11.2008
(51) Int. Cl.: G10L 21/0208, H04M 9/08

(54) **Automobile noise suppression system and method thereof**
Automobillärmunterdrückungssystem und Verfahren dafür
Système de suppression de bruits automobiles et procédé associé

(30) Priority: 06.11.2007 TW 96141852
(43) Date of publication of application: 13.05.2009
(73) Proprietor: HTC Corporation, Taoyuan City Taoyuan County (TW)
(72) Inventor: Lee, Chun-Min, Taoyuan City (TW); Wei, Ming-Ta, Taoyuan City (TW); Hsu, Yu-Chi, Taoyuan City (TW)
(74) Representative: Viering, Jentschura & Partner

(56) References cited:
- EP-A2- 0 949 795
- EP-A2- 1 679 233
- JP-A- 2002 351 488
- US-A- 5 867 574
- US-A- 6 122 384
- US-A1- 2004 142 672

## Description

### BACKGROUND OF THE INVENTION

### Field of the Invention

The present invention relates to a system and a method for noise suppression, and more particularly, to a system and a method for automobile noise suppression.

### Descriptions of the Related Art

At present, the automobiles commercially available are usually equipped with multi-function automobile computer systems. In conventional automobile computer systems, besides the Global Positioning System (GPS) device and multimedia player modules and the like, an important module, namely, a mobile communication module incorporating a hands-free feature, is provided to facilitate speech communication of the automobile drivers or other passengers at any time during the travel. However, during speech communication, in addition to the speech of the users, the voice receiving device of the mobile communication module tends to also receive and record the ambient noise, thereby compromising the communication quality.

In particular, the noises that arise during the driving process mainly originate from the so-called engine and wind noise. The wind noise is attributable to the many metal sheet slits formed on the automobile body itself, for example, the slits formed around the automobile doors and the engine cover. As the automobile travels, the ambient air will flow with respect to the automobile and wind noise will occur while the air flows through the slits. Obviously, the faster the automobile travels, the greater the wind noise occurs. Consequently, it is important to effectively suppress the engine noise and wind noise and prevent the interference of such noise on speech communication of the driver or passenger(s) in the automobile.

One conventional method is to process the received voice through a Digital Signal Processing (DSP) algorithm. More specifically, some noise suppression parameters are employed to determine a Signal-to-Noise Ratio (SNR) for suppressing the noise portion of the voice. Unfortunately, this conventional method selects only one set of fixed parameters to suppress the noise. As a result, when the automobile speed increases with higher noises, the single set of fixed parameters may be inadequate to effectively suppress the noises. In contrast, when the automobile speed decreases, the selected parameters may make an attempt to suppress the noise signals of relatively smaller magnitudes, which may affect the speech portion unexpectedly, thereby compromising the communication quality.

Another prior art example is disclosed by EP 1 679 233.

According to the above descriptions, the conventional noise suppression method employed in the automobile computer system is unable to flexibly adjust the parameters used to determine the SNR according to the magnitude of the noise, thus resulting in a poor noise suppression effect. As a result, it is highly desirable in the art to provide a solution capable of enhancing the communication speech quality by effectively suppressing the noise arising in the running automobile.

### SUMMARY OF THE INVENTION

The present invention provides a method for automobile noise suppression in an automobile according to claim 1. The invention further provides a system for automobile noise suppression in an automobile according to claim 5. Preferred embodiments of the present invention are described in the dependent claims.

One objective of this invention is to provide a system and a method for automobile noise suppression, which are able to suppress the noise component of the voice by dynamically determining the adjusting parameters for the SNR adjustment, thus yielding more clear speech and improving the quality of speech communication or voice recording in the running automobile.

Another objective of this invention is to provide a system and a method for automobile noise suppression in an automobile computer system, which utilizes the actual driving speed of the automobile as a reference to determine the noise portion and further select the adjusting parameters for the SNR adjustment. The noise portion of the voice is suppressed according to the adjusting parameters, thereby minimizing the interference to the speech component.

To this end, a method for automobile noise suppression according to th e invention comprises the following steps: receiving a voice to generate a voice signal, which includes a speech signal and a noise signal; determining an adjusting parameter set according to an automobile speed signal corresponding to a speed of the automobile; and suppressing the noise signal according to the adjusting parameter set.

This invention further discloses a system for automobile noise suppression, which comprises a speed sensing device, a processor and a noise suppression device. The speed sensing device is configured for generating an automobile speed signal. The processor is configured for receiving the automobile speed signal and determining an adjusting parameter set according to the automobile speed signal. The noise suppression device is configured for receiving a voice signal which includes a speech signal and a noise signal. The noise suppression device suppresses the noise signal and generates an adjusted voice signal according to the adjusting parameter set.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG 1** is a schematic view of the first embodiment in accordance with this invention; and
**FIG 2** is a flow chart of a method in accordance with the second embodiment of this invention.

### DESCRIPTION OF THE PREFERRED EMBODIMENT

In the following description, this invention will be explained with reference to embodiments thereof. However, these embodiments are not intended to limit this invention to any specific environment, applications or particular implementations described in these embodiments. Therefore, the description of these embodiments is only for purposes of illustration rather than limitation. In the following embodiments and the attached drawings, elements unrelated to this invention are omitted from depiction.

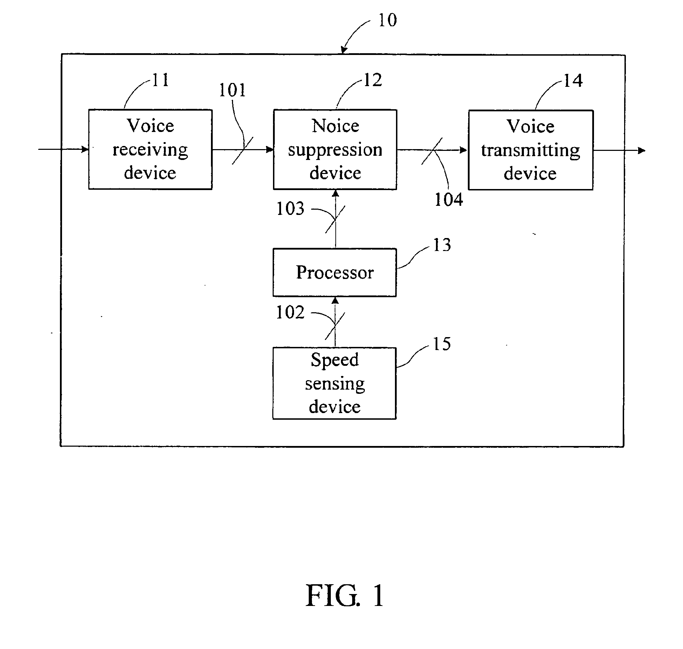

**FIG.1** depicts the first embodiment of this invention, which is a system **10** for automobile noise suppression in an automobile. The system **10** comprises a voice receiving device **11,** a noise suppression device **12,** a processor **13,** a voice transmitting device **14** and a speed sensing device **15.** The operations of the system **10** are described as follows.

As the automobile travels, the voice receiving device **11** (e.g., a microphone) receives a voice to generate a voice signal **101** and transmits the voice signal **101** to the noise suppression device **12.** Since the voice signal **101** includes a speech signal and a noise signal, that is, the voice signal **101** includes both the speech signal from the driver and the noise signal originating from the ambient environment (e.g., the engine noise and wind noise), the noise suppression device **12** proceeds to suppress the noise signal after receiving the voice signal **101** to prevent the speech signal from being interfered by the noise signal.

In addition, the speed sensing device **15** generates an automobile speed signal **102** corresponding to a speed of the automobile. The processor **13** receives the automobile speed signal **102** and then determines an adjusting parameter set **103** according to the automobile speed signal **102.** Specifically, the automobile speed signal **102** is substantially corresponding to the speed of the automobile, namely, the speed at which the automobile is traveling at that time. In one embodiment of the present invention, the speed sensing device **15** may be an odometer that pre-exists in the automobile. The processor **13** receives the automobile speed signal **102** from the odometer through a controller area network bus (CAN Bus); however, this invention is not limited thereto, and other devices capable of sensing the automobile speed may also be employed to achieve the same goal. The automobile CAN Bus is provided in the automobile computer system and may be employed to collect and provide the information on various devices of the automobile. For example, the automobile speed signal in this embodiment is the speed signal of the automobile itself.

Thereafter, the processor **13** determines the adjusting parameter set **103,** which is corresponding to the automobile speed signal **102,** by checking a speed-to-parameter lookup table. In this embodiment, the adjusting parameter set **103** is selected from a group consisting of a noise attenuation slop, a threshold of operating noise attenuation and a maximum noise attenuation level. The three adjusting parameters are also parameters used most commonly to adjust the SNR. However, other parameters applicable to noise suppression may also be utilized in this invention, added or replaced by those of ordinary skill in the art and, thus, are not to be limited herein.

The speed-to-parameter lookup table may be generated in advance through a test procedure. In particular, the magnitude of noise arising in the automobile at different traveling speeds of the automobile may be tested to record the applicable adjusting parameter set 103, which are corresponding to the different traveling speeds, in the speed-to-parameter lookup table. Also, the test may be carried out on the noise suppression chips of various specifications and automobiles of various types to generate the respective speed-to-parameter lookup tables for these automobiles, thereby making the adjusting parameter set **103** more accurate.

The processor **13** transmits the adjusting parameter set **103** selected according to the automobile speed to the noise suppression device **12.** The noise suppression device **12,** in turn, suppresses the noise signal according to the adjusting parameter set **103** and generates an adjusted voice signal **104** by combining the speech signal with the suppressed noise signal. In particular, the noise suppression device **12** determines the adjusting parameters for the SNR adjustment according to the parameters contained in the adjusting parameter set **103,** so as to suppress the noise signal of the voice signal **101**. Hence, in the adjusted voice signal **104,** the speech signal from the user will become relatively clearer.

For example, if an automobile travels initially at a speed of 50km/h, the processor **13** determines an adjusting parameter set corresponding to the speed of 50km/h by checking the speed-to-parameter lookup table, so as to adjust the SNR to 50dB. Once the automobile is accelerated to travel at a speed of 100km/h to result in louder ambient noise, the processor **13** will determine another adjusting parameter set corresponding to the speed of 100km/h by checking the speed-to-parameter lookup table, so as to adjust the SNR to 80dB, thereby enhancing the noise suppression effect.

Finally, the voice transmitting device **14** receives the adjusted voice signal **104** from the noise suppression device **12** and transmits the adjusted voice signal **104.** In this embodiment, the voice transmitting device **14** is a radio frequency (RF) module for transmitting voice signal and may be built into the computer system. In other embodiments, the adjusted voice signal **104** may also be transmitted to the processor **13** for other purposes, such as for voice recording.

The system for automobile noise suppression according to this embodiment may determine the adjusting parameter set **103** for the SNR adjustment according to the automobile speed signal **102** received by the processor **13.** In other words, the system **10** for automobile noise suppression can dynamically adjusts the parameters for the SNR adjustment according to the automobile speed so as to suppress the noise portion of the voice, thereby improving the quality of speech communication or voice recording.

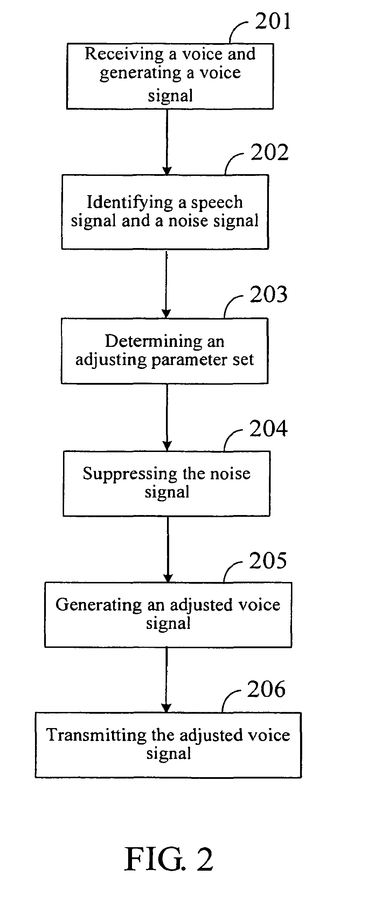

The second embodiment of this invention is a method for automobile noise suppression in the aforesaid system **10.** In reference to **FIG.2**, this method begins with step **201.** When a user is in communication and sends out a speech, the voice receiving device **11** (e.g., a microphone) is utilized to receive a voice including the speech and generate a voice signal **101,** which is corresponding to the voice and then transmitted to the noise suppression device **12.** Then, step **202** is executed where the noise suppression device **12** identifies a speech signal and a noise signal from the voice signal **101** for subsequent noise suppression processing.

Next, step **203** is executed to determine the adjusting parameter set **103** according to the automobile speed signal **102.** More particularly, this step is to receive the automobile speed signal **102** from an odometer through a CAN Bus and determine the adjusting parameter set **103** corresponding to the automobile speed signal **102** by checking the predetermined speed-to-parameter lookup table.

Specifically, the automobile speed signal **102** received by the processor **13** through the CAN Bus is substantially corresponding to a speed of an automobile. The adjusting parameter set **103** as determined according to the automobile speed signal **102** is used for adjusting the SNR. Likewise, in this embodiment, the adjusting parameter set **103** is selected from a group consisting of a noise attenuation slop, a threshold of operating noise attenuation and a maximum noise attenuation level. Additionally, the speed-to-parameter lookup table is generated in the same manner as that in the first embodiment and this will not be further described herein.

Next, step **204** is executed to suppress the noise signal according to the adjusting parameter set **103**. That is, the processor **13** transmits the adjusting parameter set **103** to the noise suppression device **12** which, according to the adjusting parameter set **103,** then adjusts the parameter for the SNR adjustment to suppress the noise signal. Subsequently, step **205** is executed where the noise suppression device **12** generates an adjusted voice signal **104.** Next, step **206** is executed to transmit the adjusted voice signal **104.** The adjusted voice signal **104** may be transmitted to an RF module for transmitting voice signal, or to the processor **13** for other purposes such as voice recording.

According to the method for automobile noise suppression in this embodiment, the adjusting parameter set **103** for the SNR adjustment is determined according to the automobile speed signal **102.** In this way, when the automobile speed is increased or decreased resulting in an increase or decrease in the ambient noise, the adjusting parameter set **103** can be adjusted dynamically to adjust the SNR for noise suppression purpose, thus minimizing the noise interference on the speech.

According to the above descriptions, the system and method for automobile noise suppression provided in this invention can dynamically change the adjusting parameters for the SNR adjustment according to the automobile speed, thereby suppressing the ambient noise interference in a preferred manner and making the speech clearer. As a result, the disadvantages of the prior art of using only one set of fixed parameters, in which there was improper suppression of the noise and consequent poor speech quality, can be eliminated.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A method for automobile noise suppression in an automobile, comprising:
receiving a voice to generate a voice signal, which includes a speech signal and a noise signal;
determining an adjusting parameter set according to an automobile speed signal corresponding to a speed of the automobile when the speech signal and the noise signal are identified from the voice signal;
suppressing the noise signal according to the adjusting parameter set after the speech signal and the noise signal are identified; and
generating an adjusted voice signal by combining the speech signal with the suppressed noise signal;
wherein the step of determining an adjusting parameter set according to an automobile speed signal further comprises:
receiving the automobile speed signal from an odometer through a controller area network bus (CAN bus); and
determining the adjusting parameter set, which is corresponding to the automobile speed signal, by checking a speed-to-parameter lookup table.

2. The method as claimed in claim 1, wherein the adjusting parameter set is selected from a group consisting of a noise attenuation slop, a threshold of operating noise attenuation and a maximum noise attenuation level.

3. The method as claimed in claim 1, further comprising:
transmitting the adjusted voice signal to a radio frequency (RF) module.

4. The method as claimed in claim 1, further comprising:
transmitting the adjusted voice signal to a processor.

5. A system for automobile noise suppression in an automobile, comprising:
a speed sensing device for generating an automobile speed signal, wherein the automobile speed signal is substantially corresponding to a speed of the automobile;
a processor for receiving the automobile speed signal and determining an adjusting parameter set according to the automobile speed signal when the speech signal and the noise signal are identified from the voice signal, wherein the processor determines the adjusting parameter set, which is corresponding to the automobile speed signal, by checking a speed-to-parameter lookup table; and
a noise suppression device for receiving a voice signal which includes a speech signal and a noise signal, wherein the noise suppression device suppresses the noise signal according to the adjusting parameter set after the speech signal and the noise signal are identified and generates an adjusted voice signal by combining the speech signal with the suppressed noise signal;
wherein the speed sensing device is an odometer, and the processor receives the automobile speed signal from the odometer through a controller area network bus (CAN bus).

6. The noise suppression system as claimed in claim 5, wherein the adjusting parameter set is selected from a group consisting of a noise attenuation slop, a threshold of operating noise attenuation and a maximum noise attenuation level.

7. The noise suppression system as claimed in claim 5, further comprising:
a voice transmitting device for receiving and transmitting the adjusted voice signal.

8. The noise suppression system as claimed in claim 7, wherein the voice transmitting device is a radio frequency (RF) module.

9. The noise suppression system as claimed in claim 5, further comprising a voice receiving device for receiving a voice to generate the voice signal according to the voice, and transmitting the voice signal to the noise suppression device.

10. The noise suppression system as claimed in claim 9, wherein the voice receiving device is a microphone.

11. The noise suppression system as claimed in claim 5, wherein the adjusted voice signal is transmitted to the processor.

## Patentansprüche

1. Ein Verfahren zur Automobilgeräuschunterdrückung in einem Automobil, welches die Schritte aufweist:
Empfangen einer Stimme zum Erzeugen eines Stimmensignals, welches ein Sprachsignal und ein Geräuschsignal aufweist;
Ermitteln eines Einstellparametersatzes gemäß einem Automobilgeschwindigkeitssignal, welches zu einer Geschwindigkeit des Automobils korrespondiert, wenn das Sprachsignal und das Geräuschsignal von dem Stimmensignal identifiziert werden;
Unterdrücken des Geräuschsignals gemäß dem Einstellparametersatz, nachdem das Sprachsignal und das Geräuschsignal identifiziert sind; und
Erzeugen eines eingestellten Stimmensignals mittels Kombinierens des Sprachsignals mit dem unterdrückten Geräuschsignal;
wobei der Schritt des Ermittelns eines Einstellparametersatzes gemäß einem Automobilgeschwindigkeitssignal ferner die Schritte aufweist:
Empfangen des Automobilgeschwindigkeitssignals von einem Kilometerzähler über einen Controller-Area-Network-Bus (CAN-Bus); und
Ermitteln des Einstellparametersatzes, welcher zum Automobilgeschwindigkeitssignal korrespondiert, indem eine Geschwindigkeit-zu-Parameter-Nachschlagetabelle überprüft wird.

2. Das Verfahren nach Anspruch 1, wobei der Einstellparametersatz aus einer Gruppe ausgewählt wird, welche aus einer Geräuschdämpfungsneigung, einem Schwellenwert von Betriebsgeräuschdämpfung und einem maximalen Geräuschdämpfungsniveau besteht.

3. Das Verfahren nach Anspruch 1, ferner den Schritt aufweisend:
Übertragen des eingestellten Stimmensignals zu einem Hochfrequenz(RF)-Modul.

4. Das Verfahren nach Anspruch 1, ferner den Schritt aufweisend:
Übertragen des eingestellten Stimmensignals zu einem Prozessor.

5. Ein System zur Automobilgeräuschunterdrückung in einem Automobil, aufweisend:
eine Geschwindigkeitserfassungsvorrichtung zum Erzeugen eines Automobilgeschwindigkeitssignals, wobei das Automobilgeschwindigkeitssignal im Wesentlichen zu einer Geschwindigkeit des Automobils korrespondiert;
einen Prozessor zum Empfangen des Automobilgeschwindigkeitssignals und zum Ermitteln eines Einstellparametersatzes gemäß dem Automobilgeschwindigkeitssignal, wenn ein Sprachsignal und ein Geräuschsignal von einem Stimmensignal identifiziert werden, wobei der Prozessor den Einstellparametersatz, welcher zum Automobilgeschwindigkeitssignal korrespondiert, ermittelt, indem eine Geschwindigkeit-zu-Parameter-Nachschlagetabelle überprüft wird; und
eine Geräuschunterdrückungsvorrichtung zum Empfangen des Stimmensignals, welches das Sprachsignal und das Geräuschsignal aufweist, wobei die Geräuschunterdrückungsvorrichtung das Geräuschsignal gemäß dem Einstellparametersatz unterdrückt, nachdem das Sprachsignal und das Geräuschsignal identifiziert sind, und ein eingestelltes Stimmensignal mittels Kombinierens des Sprachsignals mit dem unterdrückten Geräuschsignal erzeugt;
wobei die Geschwindigkeitserfassungsvorrichtung ein Kilometerzähler ist und der Prozessor das Automobilgeschwindigkeitssignal von dem Kilometerzähler über einen Controller-Area-Network-Bus (CAN-Bus) empfängt.

6. Das Geräuschunterdrückungssystem nach Anspruch 5, wobei der Einstellparametersatz aus einer Gruppe ausgewählt ist, welche aus einer Geräuschdämpfungsneigung, einem Schwellenwert von Betriebsgeräuschdämpfung und einem maximalen Geräuschdämpfungsniveau besteht.

7. Das Geräuschunterdrückungssystem nach Anspruch 5, ferner aufweisend:
eine Stimmenübertragungsvorrichtung zum Empfangen und Übertragen des eingestellten Stimmensignals.

8. Das Geräuschunterdrückungssystem nach Anspruch 7, wobei die Stimmenübertragungsvorrichtung ein Hochfrequenz(RF)-Modul ist.

9. Das Geräuschunterdrückungssystem nach Anspruch 5, ferner aufweisend eine Stimmenempfangsvorrichtung zum Empfangen einer Stimme zur Erzeugung des Stimmensignals gemäß der Stimme und zum Übertragen des Stimmensignals zur Geräuschunterdrückungsvorrichtung.

10. Das Geräuschunterdrückungssystem nach Anspruch 9, wobei die Stimmenempfangsvorrichtung ein Mikrophon ist.

11. Das Geräuschunterdrückungssystem nach Anspruch 5, wobei das eingestellte Stimmensignal zum Prozessor übertragen wird.

## Revendications

1. Procédé de suppression de bruits automobiles dans un véhicule automobile, comprenant :
recevoir une entrée vocale en vue de générer un signal vocal, lequel inclut un signal de parole et un signal de bruit ;
déterminer un ensemble de paramètres d'ajustement selon un signal de vitesse d'automobile correspondant à une vitesse du véhicule automobile lorsque le signal de parole et le signal de bruit sont identifiés à partir du signal vocal ;
supprimer le signal de bruit selon l'ensemble de paramètres d'ajustement dès lors que le signal de parole et le signal de bruit ont été identifiés ; et
générer un signal vocal ajusté en combinant le signal de parole avec le signal de bruit supprimé ;
dans lequel l'étape de détermination d'un ensemble de paramètres d'ajustement selon un signal de vitesse d'automobile consiste en outre à :
recevoir le signal de vitesse d'automobile en provenance d'un compteur kilométrique à travers un bus de réseau local de commande (bus CAN) ; et
déterminer l'ensemble de paramètres d'ajustement, qui correspond au signal de vitesse d'automobile, en contrôlant une table de consultation de rapports vitesses / paramètres.

2. Procédé selon la revendication 1, dans lequel l'ensemble de paramètres d'ajustement est sélectionné dans un groupe comportant une pente d'atténuation du bruit, un seuil d'atténuation du bruit de fonctionnement et un niveau maximum d'atténuation du bruit.

3. Procédé selon la revendication 1, consistant en outre à :
transmettre le signal vocal ajusté à un module de fréquence radio (RF).

4. Procédé selon la revendication 1, consistant en outre à :
transmettre le signal vocal ajusté à un processeur.

5. Système de suppression de bruits automobiles dans un véhicule automobile, comprenant :
un dispositif de détection de vitesse destiné à générer un signal de vitesse d'automobile, dans lequel le signal de vitesse d'automobile correspond sensiblement à une vitesse du véhicule automobile ;
un processeur destiné à recevoir le signal de vitesse d'automobile et à déterminer un ensemble de paramètres d'ajustement selon le signal de vitesse d'automobile lorsque le signal de parole et le signal de bruit sont identifiés à partir du signal vocal, dans lequel le processeur détermine l'ensemble de paramètres d'ajustement, qui correspond au signal de vitesse d'automobile, en contrôlant une table de consultation de rapports vitesses / paramètres ; et
un dispositif de suppression du bruit destiné à recevoir un signal vocal qui inclut un signal de parole et un signal de bruit, dans lequel le dispositif de suppression du bruit supprime le signal de bruit selon l'ensemble de paramètres d'ajustement dès lors que le signal de parole et le signal de bruit ont été identifiés, et génère un signal vocal ajusté en combinant le signal de parole avec le signal de bruit supprimé ;
dans lequel le dispositif de détection de vitesse est un compteur kilométrique, et le processeur reçoit le signal de vitesse d'automobile en provenance du compteur kilométrique à travers un bus de réseau local de commande (bus CAN).

6. Système de suppression du bruit selon la revendication 5, dans lequel l'ensemble de paramètres d'ajustement est sélectionné dans un groupe comportant une pente d'atténuation du bruit, un seuil d'atténuation du bruit de fonctionnement et un niveau maximum d'atténuation du bruit.

7. Système de suppression du bruit selon la revendication 5, comprenant en outre :
un dispositif de transmission vocale destiné à recevoir et à transmettre le signal vocal ajusté.

8. Système de suppression du bruit selon la revendication 7, dans lequel le dispositif de transmission vocale est un module de fréquence radio (RF).

9. Système de suppression du bruit selon la revendication 5, comprenant en outre un dispositif de réception vocale destiné à recevoir une entrée vocale en vue de générer le signal vocal selon l'entrée vocale, et à transmettre le signal vocal au dispositif de suppression du bruit.

10. Système de suppression du bruit selon la revendication 9, dans lequel le dispositif de réception vocale est un microphone.

11. Système de suppression du bruit selon la revendication 5, dans lequel le signal vocal ajusté est transmis au processeur.
